# FASCICULE DE BREVET EUROPEEN

(11) **EP 2 219 898 B1**
(45) Date de publication et mention de la délivrance du brevet: **20.02.2019**
(21) Numéro de dépôt: 08868906.2
(22) Date de dépôt: 10.12.2008
(51) Int. Cl.: B60K 28/00, F16H 61/12, B60W 50/02

(54) **PROCÉDÉ DE GESTION DE DYSFONCTIONNEMENTS D'UN SYSTÈME DE CONTRÔLE À ARCHITECTURE MODULAIRE D'UN GROUPE MOTOPROPULSEUR DE VÉHICULE AUTOMOBILE ET SYSTÈME DE CONTRÔLE CORRESPONDANT**
VERFAHREN ZUR VERWALTUNG VON FEHLFUNKTIONEN EINES STEUERSYSTEMS MIT MODULARER ARCHITEKTUR EINES ANTRIEBSSTRANGS EINES KRAFTFAHRZEUGES UND ENTSPRECHENDES STEUERSYSTEM
METHOD OF MANAGING MALFUNCTIONS OF A MODULAR-ARCHITECTURE CONTROL SYSTEM OF A MOTOR VEHICLE POWER PLANT AND CORRESPONDING CONTROL SYSTEM

(30) Priorité: 20.12.2007 FR 0760137
(43) Date de publication de la demande: 25.08.2010
(73) Titulaire: Renault S.A.S., 92100 Boulogne-Billancourt (FR)
(72) Inventeur: REGNARD DE LAGNY, Joseph, F-91290 La Norville (FR); BELAID, Abdelmalik, F-75012 Paris (FR); SEYRES, Sylvain, F-91190 Gif Sur Yvette (FR)
(86) Numéro de dépôt international: PCT/EP2008/067239
(87) Numéro de publication internationale: WO 2009/083413

(56) Documents cités:
- EP-A- 0 632 193
- DE-A1- 19 607 429
- DE-A1- 19 638 377
- DE-A1-102006 018 975
- US-A- 5 388 045

## Description

L'invention concerne les véhicules automobiles, notamment les systèmes de contrôle des groupes motopropulseurs de véhicule automobile, en particulier pour la gestion de dysfonctionnements du système de contrôle et/ou du groupe motopropulseur.

Tous les calculateurs de contrôle de groupes motopropulseurs de véhicules automobiles intègrent des stratégies de diagnostic embarqué, permettant de détecter d'éventuelles défaillances du système de contrôle (défaut électrique ou fonctionnel d'un composant, par exemple), voire du groupe motopropulseur lui-même (fuite ou débranchement d'un tuyau d'alimentation en air du moteur, par exemple).

Ces calculateurs de contrôle doivent également intégrer des stratégies de reconfiguration (« modes dégradés »). Celles-ci permettent, lorsqu'une défaillance a été identifiée par le calculateur, d'adapter la gestion du groupe motopropulseur afin de garantir un maintien aussi large que possible de son fonctionnement, tout en garantissant prioritairement la sécurité des utilisateurs.

Les exigences croissantes vis-à-vis des prestations du groupe motopropulseur, tant d'un point de vue réglementaire (normes d'émissions de polluants, réglementations concernant le diagnostic associé) que du point de vue utilisateur (accroissement des exigences sécuritaires, augmentation des prestations (performances, consommation, agrément, démarrage, etc.), intégration de nouvelles fonctionnalités (régulateur/limiteur de vitesse véhicule, contrôle de trajectoire, etc.) conduisent à une croissance exponentielle de la complexité de la définition technique des systèmes de contrôle et de la taille des logiciels associés. Cette croissance s'accompagne évidemment d'une croissance parallèle des possibilités de défaillance d'un composant du système, et donc des besoins de stratégies de diagnostic et de modes de recouvrement (modes dégradés).

Pour répondre à cette contrainte forte, une grande majorité des constructeurs automobiles et fournisseurs de système de contrôle moteur s'orientent vers la mise en place de logiciels de contrôle basés sur une architecture modulaire, i.e. construits à partir de « briques » élémentaires (ou modules). Une telle architecture vise d'une part à garantir le confinement (limitation du périmètre d'impact de toute modification, évolution ou erreur, à une zone définie du logiciel) et d'autre part à améliorer la qualité des logiciels tout en réduisant leur coût, par la réutilisation autant que possible de modules déjà développés et validés.

Actuellement, tous les systèmes de contrôle moteur embarqués intègrent une fonction de gestion des défaillances, que l'on désignera par la suite sous le terme « gestionnaire de pannes ». Le principe générique de cette fonction est le suivant :
les modules constituant le logiciel de contrôle et intégrant des stratégies de détections de défaillances communiquent avec le gestionnaire à chaque réalisation de chacune de ces stratégies, en lui indiquant le résultat élémentaire binaire (défaillance détectée ou non) de celle-ci. Le gestionnaire de pannes réalise un filtrage de ces informations élémentaires pour confirmer la défaillance ou sa disparition. Selon les stratégies considérées, ce filtrage peut-être plus ou moins complexe. On peut citer à titre d'exemples simples :
   - un filtrage purement temporel : si la défaillance est détectée pendant un temps supérieur à un seuil T1, elle est confirmée présente. Si l'absence de défaillance est détectée pendant un temps supérieur à un seuil T2, la défaillance est déclarée absente ;
   - un filtrage par compteur : un compteur C, borné entre deux valeurs CMIN et CMAX, est initialisé à une valeur donnée (choix par étalonnage). A chaque détection élémentaire de la défaillance, ce compteur C est augmenté d'une valeur INC. A chaque détection élémentaire de l'absence de la défaillance, ce compteur est diminué d'une valeur DEC. Lorsque le compteur C atteint la valeur CMAX, la défaillance est confirmée présente. Lorsque le compteur C atteint la valeur CMIN, elle est déclarée absente.

Pour chaque défaillance possible du système, le gestionnaire de panne met à disposition de l'ensemble des modules constituant le logiciel de contrôle une information binaire (désigné sous le terme générique de « panne ») indiquant la présence ou l'absence de la défaillance.

Lorsqu'une défaillance est confirmée, le gestionnaire de pannes l'enregistre dans la mémoire non volatile du calculateur. Selon la réalisation choisie, il peut également enregistrer des informations complémentaires (valeurs de certains paramètres ou grandeurs physiques lors de la confirmation de la défaillance par exemple). Ces enregistrements sont consultables par le biais d'outils de diagnostic débarqué, offrant ainsi une aide au réparateur pour remédier à la défaillance lors du passage du véhicule en atelier pour réparation.

Dans la majorité des systèmes de contrôle moteur, le gestionnaire de pannes gère également, selon la panne considérée, l'interface avec le tableau de bord du véhicule pour alerter, par des voyants ou des messages textuels ou sonores, le conducteur de l'état défaillant du système.

En pratique, pour des raisons liées d'une part à la réparabilité et d'autre part à la gestion des alertes conducteur et des modes dégradés éventuels résultant de la défaillance, le gestionnaire de pannes met à disposition pour une même défaillance plusieurs booléens de pannes, comme par exemple la panne confirmée, la panne confirmée maintenue, la panne confirmée mémorisée et la panne mémorisée.

Dans les réalisations usuelles de gestion des défaillances et des modes dégradés, chacun des modules logiciels consomme les informations précédentes pour les défaillances impactant son fonctionnement. Selon la valeur de ces informations, il enclenche les stratégies de recouvrement nécessaires.

Toutefois, la croissance exponentielle de la complexité des systèmes de contrôle moteur et les besoins accrus de réutilisation de modules rendent cette réalisation difficile.

En effet, le nombre de défaillances possibles sur les systèmes de contrôle moteur actuels peut atteindre plusieurs centaines (environ 300 sur un système Diesel standard, et 200 sur un système à allumage commandé). Pour chacune de ces défaillances, le concepteur du module doit se poser la question de l'incidence de celle-ci sur le fonctionnement de son module, et du mode dégradé le plus adapté. Malgré le soin apporté et les différents outils dont il peut disposer (Analyse Fonctionnelle, Analyse des Modes de Défaillances, de leurs Effets et de leurs Criticités), les risques d'erreurs et/ou d'oublis sont nombreux.

Le problème est rendu encore plus délicat dans le cadre de la réutilisation de modules : selon l'environnement dans lequel est intégré un module « réutilisé », les pannes possibles peuvent différer largement, et il est donc nécessaire de modifier le module pour l'adapter à son environnement, ce qui est en totale opposition avec l'objectif initial de la réutilisation.

Une solution habituellement mise en oeuvre pour répondre à cette problématique est la suivante :
- chaque mode dégradé disponible dans un module donné est activable par un interrupteur logique (« switch ») commandé par ce module,
- ce « switch » est activé par une liste de pannes fournies par le gestionnaire de pannes, et le choix de ces pannes s'effectue par étalonnage. Ceci permet d'adapter le module à son environnement sans modification logicielle.

Toutefois, cette solution s'avère également très délicate à mettre en oeuvre en regard de la complexification des systèmes de contrôle moteur.

Si l'on considère à titre d'exemple un logiciel de contrôle moteur constitué de 150 modules, chacun disposant en moyenne d'un seul mode dégradé, l'ensemble du système pouvant subir 300 défaillances, le nombre de possibilités d'étalonnage des modes dégradés résultant est très élevé. Cette complexité atteint aujourd'hui des niveaux tels que la maîtrise de ces systèmes et des étalonnages associés devient critique, et de plus en plus difficilement réalisable.

Enfin, il faut noter que dans ce type de réalisation, la gestion de défaillances multiples est encore plus délicate. A titre d'exemple, en cas de défaillance d'un capteur (capteur de pression atmosphérique par exemple), un mode dégradé pertinent peut être l'utilisation d'une valeur issue d'un modèle, modèle utilisant comme entrées d'autres valeurs physiques (par exemple la pression mesurée dans le collecteur d'admission). Dans le cas où le système subit à la fois une défaillance du capteur de pression atmosphérique et du capteur de pression collecteur d'admission, il est nécessaire de prévoir un mode dégradé spécifique. Ce type de problématique complexifie encore la gestion des modes dégradés, déjà très délicate dans le cas de défaillance simple évoqué précédemment.

A titre d'exemple, les documents EP 632193 A et DE 102006018975 sont mentionnés.

Un but de l'invention est d'adapter la gestion des erreurs et des modes dégradés qui en résultent éventuellement à une architecture modulaire, d'une part en garantissant la compatibilité des choix faits avec l'architecture retenue, et d'autre part en optimisant la sécurité et la disponibilité du système pour ses utilisateurs.

L'invention repose notamment sur l'observation suivante : pour enclencher à bon escient un mode dégradé, un module a besoin de connaître le niveau de confiance (ou l'état de dégradation) des informations ou variables qu'il consomme ou des fonctions qu'il sollicite, et non pas la ou les raisons de l'enclenchement de ce mode dégradé.

Ainsi, selon un mode de réalisation, on associe à chaque information ou variable échangée entre module logiciel pour laquelle cela est pertinent, un indicateur de validité décrivant le niveau de confiance ou l'état de dégradation associé à cette information ou variable. Cet indicateur est élaboré par le module générateur de la variable considérée, en fonction des indicateurs de validité de ces variables d'entrée.

Dans le cas où le module intègre des stratégies de diagnostic (par exemple diagnostic électrique pour un module d'acquisition d'un capteur, diagnostic fonctionnel d'écart de boucle pour un module de régulation), il reçoit le ou les signaux de pannes résultants issus du gestionnaire de panne et utilise ceux-ci pour la production des indicateurs de validité associés à ces variables ou informations de sortie.

L'indicateur de validité est utilisé pour caractériser le niveau de confiance accordé aux variables ou informations échangées entre modules logiciels, mais peut être également étendu à la caractérisation de l'état d'une fonction dans sa globalité, dans le cas d'un fonctionnement sous défaillance (par exemple pour indiquer qu'une fonction de régulation est désactivée en raison d'une panne).

L'invention permet ainsi notamment une simplification des échanges inter-modules et une réutilisation beaucoup plus aisée des modules.

Ainsi, selon un aspect de l'invention, il est proposé un procédé de gestion d'informations échangées au sein d'un système de contrôle à architecture modulaire d'un groupe motopropulseur de véhicule automobile et dont les valeurs sont susceptibles d'être affectées par un dysfonctionnement dudit système de contrôle et/ou dudit groupe motopropulseur. Dans ce procédé, on affecte à chacune de ces informations une indication de validité de la valeur de ladite information, cette indication de validité étant élaborée par le module générateur de ladite information à partir d'indications d'entrée reçues par ledit module générateur et représentative d'un éventuel dysfonctionnement de ce module générateur ou d'un autre module.

Selon un mode de mise en oeuvre dans lequel le module générateur est un module d'acquisition d'au moins un paramètre, les indications d'entrée sont les indicateurs représentatifs d'un état éventuel de panne dudit module d'acquisition.

Ces indicateurs représentatifs d'un état éventuel de panne dudit module d'acquisition peuvent être délivrés par un module gestionnaire de pannes.

Selon un autre mode de mise en oeuvre, les indications d'entrée dudit module générateur sont les indications de validité associées à des informations délivrées audit module générateur par un autre module.

Ces indications de validité peuvent être susceptibles de prendre plusieurs valeurs différentes, respectivement représentatives de différents niveaux de dysfonctionnement.

Selon un autre aspect de l'invention, il est proposé un système de contrôle à architecture modulaire d'un groupe motopropulseur de véhicule automobile, comportant plusieurs modules aptes à échanger des informations dont les valeurs sont susceptibles d'être affectées par un dysfonctionnement dudit système de contrôle et/ou dudit groupe motopropulseur, chacun de ces modules comprenant des moyens d'entrée aptes à recevoir des indications d'entrée représentatives d'un éventuel dysfonctionnement de ce module ou d'un autre module, l'un au moins de ces modules comportant des moyens de sortie aptes à délivrer au moins une information et des moyens d'élaboration aptes à affecter à ladite au moins une information une indication de validité de la valeur de ladite au moins une information.

Selon un mode de réalisation dans lequel au moins un module est un module d'acquisition d'au moins un paramètre, les indications d'entrées destinées à être reçues par les moyens d'entrée de ce module d'acquisition sont des indicateurs représentatifs d'un état éventuel de panne dudit module d'acquisition.

Selon un mode de réalisation, le système comprend en outre un module gestionnaire de pannes apte à délivrer des indicateurs représentatifs d'un état éventuel de panne dudit module d'acquisition.

Selon un mode de réalisation, les indications d'entrée destinées à être reçues par les moyens d'entrée d'au moins un module sont des indications de validité associées à des informations délivrées à ce module par un autre module.

D'autres avantages et caractéristiques de l'invention apparaîtront à la l'examen de la description détaillée de modes de mise en oeuvre et de réalisation, nullement limitatifs, sur lesquels :

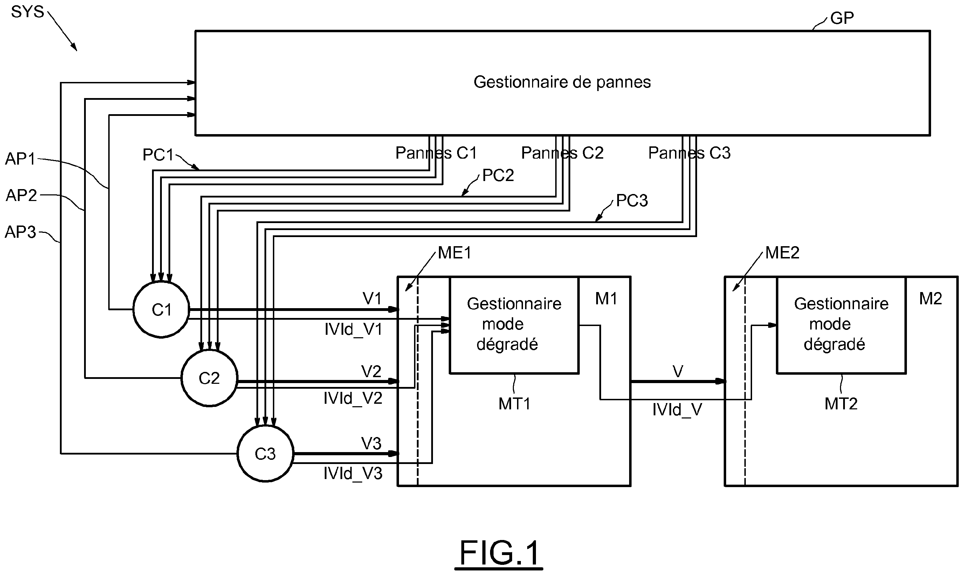

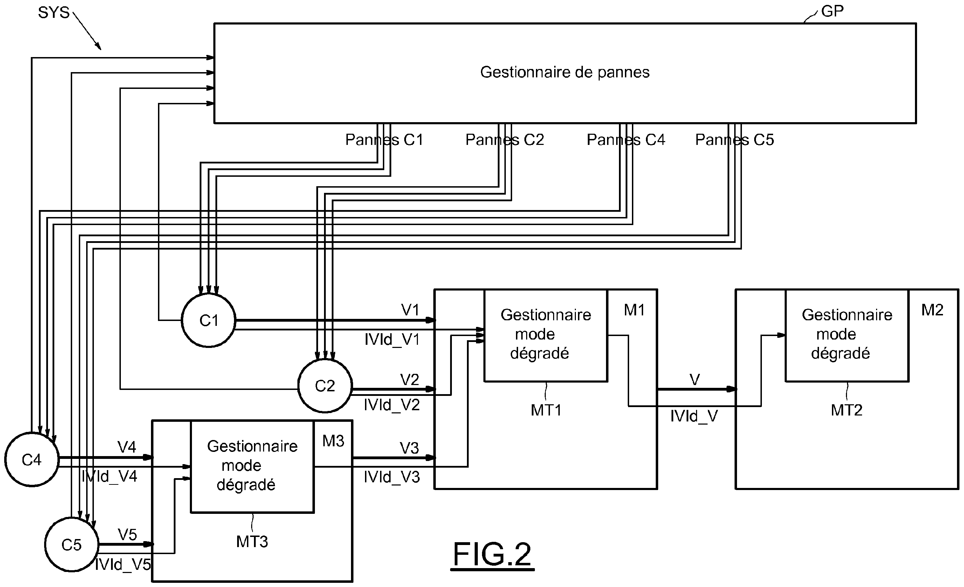

- les figures 1 et 2 illustrent schématiquement deux modes de réalisation et de mise en oeuvre de l'invention.

Sur la figure 1, la référence SYS désigne un système de contrôle d'un groupe motopropulseur de véhicule automobile, que ce véhicule automobile soit du type essence ou Diesel. Le système de contrôle est à architecture modulaire en ce sens qu'il comporte différents modules incorporés par exemple de façon logicielle au sein d'un calculateur de contrôle, comme par exemple un module gestionnaire de pannes GP, et différents modules fonctionnels M1, M2.

Le système de contrôle SYS comporte par ailleurs trois modules d'acquisition ou capteurs C1, C2, C3 capables de délivrer respectivement des informations V1, V2 et V3.

Chaque module fonctionnel comporte par ailleurs des moyens de traitement MT1, MT2 capables de mettre en oeuvre un mode dégradé de fonctionnement du module.

Les modules d'acquisition C1, C2, C3 en présence de défaillances potentielles de leur fonctionnement, délivrent des informations de défaillance (flèches AP1, AP2, AP3) au gestionnaire de pannes GP et reçoivent en retour des signaux de pannes confirmées PC1, PC2, PC3, par exemple des booléens, issus du gestionnaire de pannes. Une panne est dite confirmée lorsqu'elle résulte par exemple d'une répétition d'indications de défaillance émises par le module d'acquisition vers le gestionnaire de pannes GP.

A partir des signaux PC1, PC2 et PC3, les modules d'acquisition C1, C2, C3 élaborent des indicateurs de validité associés à leurs informations de sortie V1, V2, V3 et respectivement référencés IV1d_V1, IV1d_V2, IV1d_V3.

Ainsi, le seul module consommateur des signaux de panne est le module intégrant la stratégie de diagnostic de ces pannes (que ce soit un module d'acquisition ou un autre module) et aucun autre.

Le module M1 reçoit sur ses moyens d'entrée ME1 les informations d'entrée V1, V2, V3 ainsi que les indications de validité associées, et les moyens de traitement MT1 élaborent à partir de ces indications de validité une indication de validité IV1d_V associée à la variable de sortie V délivrée par le module M1.

Les moyens de traitement MT2 du module M2 sont informés de l'état de validité de la valeur de l'information d'entrée V grâce à l'indicateur de validité IV1d_V. Les moyens de traitement MT2 peuvent ainsi à leur tour appliquer un mode de dégradé spécifique.

Dans l'architecture modulaire illustrée sur la figure 2, les modules d'acquisition C1 et C2 sont inchangés par rapport à ceux illustrés sur la figure 1.

Par contre, il est prévu deux autres modules d'acquisition C4 et C5.

D'une façon analogue à ce qui a été décrit ci-avant, à partir de l'état des signaux de pannes confirmées, les modules d'acquisition produisent les indicateurs de validité associés à leurs sorties respectives V1, V2, V4 et V5.

Le module fonctionnel M3 reçoit en entrée les indicateurs de validité associés aux variables d'entrée V4 et V5 et les moyens de traitement MT3 élaborent l'indicateur de validité IV1d_V3 associé à la variable de sortie V3 produite par ce module M3.

Les moyens de traitement MT1 du module M1 reçoivent également cet indicateur de validité IV1d_V3.

Il convient ainsi de noter que grâce à l'application des indicateurs de validité, le passage de l'architecture illustrée sur la figure 1 à l'architecture illustrée sur la figure 2 n'a strictement aucune incidence sur les modules M1 et M2 car ceux-ci reçoivent dans le deux cas les mêmes indications de validité. En conséquence, ces modules M1 et M2 peuvent être totalement réutilisables d'une architecture à une autre.

Un autre objectif du diagnostic et des modes dégradés des systèmes de contrôle moteur est d'optimiser la disponibilité du moteur en cas de défaillance. Dans ce cadre, une information binaire « bon/mauvais » portée par une indication de validité peut ne pas être optimale dans certains cas. En effet, et à titre d'exemple non limitatif :
- dans le cas de l'acquisition d'un capteur, si l'on détecte une défaillance électrique de celle-ci, il est parfois possible de reconstituer une valeur « proche » de la réalité à partir d'un modèle utilisant d'autres informations disponibles dans le système (par exemple reconstitution du débit d'air frais entrant dans le moteur à partir du régime moteur, de la température et de la pression d'admission dans le cas d'une défaillance du débitmètre d'admission). Dans ce cas, il convient d'informer de cet état les modules consommateurs de la variable en question ;
- dans le cas d'un calcul intermédiaire (par exemple estimation des pertes par frottement du moteur), certaines variables (dites « de premier ordre ») sont essentielles (régime et température du moteur dans l'exemple), alors que d'autres (dites « de second ordre ») ne servent qu'au calcul de termes correctifs permettant d'atteindre la précision demandée en mode normal (toujours dans l'exemple, charge alternateur, pression du circuit de climatisation, par exemple). Selon la variable d'entrée qui est défaillante, l'impact sur le résultat sera donc différent. Là encore, il convient d'informer différemment les modules utilisateurs de la variable en question de ces différents états ;
- dans le cas d'un actionneur (par exemple vanne de recirculation des gaz d'échappement), la nature de la défaillance peut avoir une importance notable pour le fonctionnement des modules. Dans l'exemple, un court-circuit pourra conduire à une vanne pleine ouverte, alors qu'un circuit ouvert conduira à une vanne totalement fermée. Il convient également d'informer les modules impactés de ces différents états.
- dans le cas d'une fonction (par exemple régulation du taux de recirculation des gaz d'échappement d'un moteur Diesel, en supposant que celle-ci est réalisée au moyen d'une double boucle de régulation (une boucle sur le débit d'air frais entrant dans le moteur, la seconde sur le niveau d'ouverture de la vanne de recirculation), la fonction peut atteindre différents niveaux de modes dégradés selon la défaillance considérée. On peut par exemple citer des régulations en simple boucle en cas de perte d'un capteur utilisé pour la mesure de l'autre boucle, ou une coupure complète de la régulation en cas de défaillance touchant la vanne elle-même. Là également, il convient d'informer différemment les modules consommateurs de l'état de cette fonction.

En conséquence, il est avantageusement prévu qu'en fonction des besoins exprimés par les modules consommateurs et des capacités du module générateur, un indicateur de validité puisse prendre plus de deux valeurs ou niveaux différents. Dans la réalisation proposée, on prévoit un maximum de huit niveaux différents, les deux niveaux extrêmes correspondant respectivement au cas nominal et au pire cas. Dans les exemples évoqués précédemment, cela pourra conduire à l'exemple suivant :
pour l'acquisition d'un capteur :
   - un niveau 0 : pas de défaillance impactant la mesure du capteur. La valeur transmise est valide ;
   - un niveau 1 : défaillance impactant la mesure du capteur. Un modèle de calcul est utilisé en remplacement. La valeur transmise n'est pas exacte, mais néanmoins proche de la réalité ;
   - un niveau 7 : défaillance impactant la mesure du capteur. Il n'y a pas de modèle de calcul utilisable en remplacement, ou une seconde défaillance rend celui-ci indisponible. La valeur transmise est une valeur de remplacement ;
   - éventuellement d'autres niveaux intermédiaires selon le besoin.
pour un actionneur :
   - un niveau 0 : pas de défaillance. L'actionneur fonctionne normalement ;
   - un niveau 1 : l'actionneur est bloqué en position de repos ;
   - un niveau 7 : l'actionneur est bloqué en position de travail maximal (pleine ouverture) ;
   - éventuellement d'autres niveaux intermédiaires selon le besoin.
pour une variable ou information intermédiaire :
   - un niveau 0 : toutes les variables utilisées pour le calcul sont valides. La valeur calculée est donc valide ;
   - un niveau 1 : une variable d'entrée de second ordre est dégradée ou invalide, ou une variable d'entrée de premier ordre est dégradée. En conséquence, la variable de sortie résultant du calcul est dégradée, mais reste néanmoins proche de la réalité ;
   - un niveau 7 : plusieurs variables d'entrée de second ordre sont dégradées ou invalides, ou une variable d'entrée de premier ordre est invalide. En conséquence, la variable de sortie n'est pas représentative de la réalité, ou est une valeur de remplacement ;
   - éventuellement d'autres niveaux intermédiaires selon le besoin.
pour une fonction :
   - un niveau 0 : la fonction est nominale ;
   - un niveau 1 : une défaillance conduit au basculement de la fonction sur un mode dégradé « intermédiaire » (par exemple simple bouche de régulation dans le cas d'une double boucle, pilotage en boucle ouverte, etc.) ;
   - un niveau 7 : la fonction est désactivée et se place dans la position de repos (la plus sécuritaire). On peut par exemple citer la coupure de la suralimentation ou de la régulation de recirculation des gaz d'échappement d'un moteur Diesel ;
   - éventuellement d'autres niveaux intermédiaires selon le besoin (par exemple pour différencier un fonctionnement en boucle ouverte d'un fonctionnement en simple boucle de régulation).

Le fait d'associer aux indications de validité plusieurs valeurs différentes respectivement représentatives de différents niveaux de dysfonctionnement, permet notamment :
- l'adaptation simple du comportement du système aux cas de défaillances multiples. En effet, le découpage du logiciel en modules élémentaires permet une relative simplicité de ceux-ci. L'analyse du comportement dysfonctionnel d'un module (i.e. des impacts d'éventuelles erreurs des entrées de celui-ci sur ses sorties) est donc aisée, et la multiplicité des niveaux possibles des indicateurs de validité permet au concepteur du module de définir facilement ceux-ci en fonction de l'état des entrées, y compris dans le cas où plusieurs entrées ont des indicateurs de validité différents de l'état 0. Ainsi, l'adaptation du comportement du module (et donc par assemblage des modules du système de contrôle complet) est réalisée de façon automatique et naturelle ;
- la réutilisation immédiate et sans adaptation aucune de modules dans d'autres systèmes et/ou architectures de contrôle moteur. En effet, sous réserve évidemment que les entrées et sorties attendues du module dans un nouvel environnement soient les mêmes, celui-ci s'intègre, adapte ses modes dégradés aux états de ses entrées, et produit les indicateurs de validité associés à ses sorties sans qu'aucune modification ne soit nécessaire. Cela est dû au fait que le module adapte son comportement aux indicateurs de validité de ses entrées, indépendamment des causes sources menant aux changements de valeurs de ceux-ci.

Ainsi, le comportement du système assemblé s'adapte de façon automatique et au plus juste à son état de défaillance. La disponibilité maximale du système est donc garantie naturellement, et ce quelle que soit l'architecture de celui-ci. Ceci est particulièrement important dans le cadre de la multiplication des systèmes de contrôle en regard de la diversité des besoins (extension de la gamme de véhicules, adaptation aux besoins et réglementations locaux dans le cadre de la mondialisation du marché automobile, etc.). La charge de travail nécessaire à l'étude des impacts sur le système d'une modification locale, voire à l'analyse d'un nouveau système constitué d'un assemblage de modules existants, est considérée réduite.

La définition et le mode d'élaboration des indications de validité associées aux différentes variables ou informations sont par exemple effectués lors de la conception logicielle du système de contrôle.

A cet égard, un module consommateur d'une information ou variable d'entrée, ou de l'état d'une fonction ou d'un composant, comporte des besoins vis-à-vis de celle-ci (niveaux de précision/dégradation souhaités et comportement appliqué face à ces niveaux).

Le concepteur d'un module logiciel, à partir de ces besoins et des capacités propres du module (stratégie de diagnostic et/ou mode dégradé prévu) élabore les différents niveaux de validité attachés à la variable ou à l'état de la fonction ou du composant qu'il élabore et la signification physique de ces niveaux ainsi que les conditions de basculement dans un niveau. La programmation logicielle de l'élaboration des différentes indications de validité ainsi que la gestion des modes dégradés qui en résultent sont ensuite programmées à partir de ces informations de conception.

Si la mise en oeuvre d'un tel processus est relativement lourde dans le cadre d'une première application d'une architecture logicielle modulaire, le gain apporté par la suite pour l'ensemble des développements et évolutions, suivant cette première application, justifie amplement cette charge ponctuelle.

## Revendications

1. Procédé de gestion d'informations échangées au sein d'un système de contrôle à architecture logicielle modulaire d'un groupe motopropulseur de véhicule automobile et dont les valeurs sont susceptibles d'être affectées par un dysfonctionnement dudit système de contrôle et/ou dudit groupe motopropulseur, dans lequel on affecte à chacune de ces informations une indication de validité (IV1d_V) de la valeur de ladite information (V), la définition et le mode d'élaboration des indications de validité associées auxdites informations ayant été effectuées lors d'une conception logicielle des modules du dudit système de contrôle à architecture modulaire en fonction des besoins et des capacités propres des modules, et lors dudit échange d'informations ladite indication de validité affectée à une information est élaborée par un module générateur (M1, C1, C2, C3) de ladite information (V) à partir d'indications d'entrée (IV1d_Vi) reçues par ledit module générateur (M1) et représentatives d'un éventuel dysfonctionnement de ce module générateur ou d'un autre module (C1, C2, C3) et à partir d'une programmation logicielle dudit module générateur résultant des informations de conception dudit module relatives à la définition et au mode d'élaboration de ladite indication de validité.

2. Procédé selon la revendication 1, dans lequel le module générateur est un module d'acquisition (C1, C2, C3) d'au moins un paramètre et les indications d'entrées sont des indicateurs (PC1, PC2, PC3) représentatifs d'un état éventuel de panne dudit module d'acquisition.

3. Procédé selon la revendication 1 ou 2, dans lequel les indicateurs représentatifs d'un état éventuel de panne dudit module d'acquisition sont délivrés par un module gestionnaire de panne (GP).

4. Procédé selon l'une quelconque des revendications précédentes, dans lequel les indications d'entrée dudit module générateur (M1) sont des indications de validité (IV1d_Vi) associées à des informations délivrées audit module générateur par un autre module (C1, C2, C3).

5. Procédé selon l'une des revendications précédentes, dans lequel les indications de validité (IV1d_Vi) sont susceptibles de prendre plusieurs valeurs différentes respectivement représentatives de différents niveaux de dysfonctionnement.

6. Procédé selon l'une quelconque des revendications précédentes dans lequel l'indication de validité est élaborée par le module générateur (M1) de ladite information à partir d'indications de défaillance détectées par le module générateur (M1) lui-même.

7. Système de contrôle à architecture logicielle modulaire d'un groupe motopropulseur de véhicule automobile, comportant plusieurs modules (M1, M2, M3, C1, C2, C3) aptes à échanger des informations dont les valeurs sont susceptibles d'être affectées par un dysfonctionnement dudit système de contrôle et/ou dudit groupe motopropulseur, les valeurs desdites informations étant affectées d'indications de validité, la définition et le mode d'élaboration des indications de validité associées auxdites informations ayant été effectuées lors d'une conception logicielle desdits modules en fonction des besoins et des capacités propres des modules, chacun de ces modules comprenant des moyens d'entrée aptes à recevoir des indications d'entrée (IV1d_Vi) représentatives d'un éventuel dysfonctionnement de ce module ou d'un autre module, l'un au moins de ces modules (M1, C1, C2, C3) comportant des moyens de sortie aptes à délivrer au moins une information (V) et des moyens d'élaboration aptes à affecter à chaque information ladite indication de validité (IVld_V) de la valeur de chaque information à partir desdites indications d'entrées et d'une programmation logicielle dudit module résultant des informations de conception dudit module relatives à la définition et au mode d'élaboration de ladite indication de validité.

8. Système selon la revendication 7, dans lequel au moins un module est un module d'acquisition (Ci) d'au moins un paramètre et les indications d'entrées destinées à être reçues par les moyens d'entrée de ce module d'acquisition sont des indicateurs représentatifs d'un état éventuel de panne dudit module d'acquisition.

9. Système selon l'une des revendications 7 ou 8, comprenant en outre un module gestionnaire de panne (GP) apte à délivrer les indicateurs représentatifs d'un état éventuel de panne d'au moins un module.

10. Système selon l'une des revendications 7 à 9, dans lequel les indications d'entrée destinées à être reçues par les moyens d'entrée d'au moins un module (M1) sont des indications de validité (IV1d_Vi) associées à des informations délivrées à ce module par un autre module.

11. Système selon l'une des revendications 7 à 10, dans lequel les indications de validité (IV1d_Vi) sont susceptibles de prendre plusieurs valeurs différentes respectivement représentatives de différents niveaux de dysfonctionnement.

12. Système selon l'une quelconque des revendications 7 à 11 dans lequel un module au moins comporte des moyens de détection de sa propre défaillance.

## Patentansprüche

1. Verfahren zur Verwaltung von Informationen, die innerhalb eines Steuerungssystems mit modularer Softwarearchitektur eines Antriebsstrangs eines Kraftfahrzeugs ausgetauscht werden, und deren Werte von einer Fehlfunktion des Steuerungssystems und/oder des Antriebsstrangs beeinflusst werden können, wobei jeder dieser Informationen eine Gültigkeitsangabe (IV1d_V) des Werts der Information (V) zugewiesen wird, wobei die Definition und die Art und Weise der Erstellung der Gültigkeitsangaben, die mit den Informationen in Verbindung stehen, bei einer Softwareentwicklung der Module des Steuerungssystems mit modularer Architektur in Abhängigkeit von den Bedarfen und den eigenen Kapazitäten der Module durchgeführt wurden, und bei dem Austausch von Informationen die Gültigkeitsangabe, die einer Information zugewiesen wird, von einem Erzeugungsmodul (M1, C1, C2, C3) der Information (V) auf Grundlage von Eingangsangaben (IV1d_Vi), die von dem Erzeugungsmodul (M1) empfangen werden und für eine eventuelle Fehlfunktion dieses Erzeugungsmoduls oder eines anderen Moduls (C1, C2, C3) repräsentativ sind, und auf Grundlage einer Softwareprogrammierung des Erzeugungsmoduls, die aus den Entwicklungsinformationen des Moduls hervorgeht, die die Definition und die Art und Weise der Erstellung der Gültigkeitsangabe betreffen, erstellt wird.

2. Verfahren nach Anspruch 1, wobei das Erzeugungsmodul ein Modul zur Erfassung (C1, C2, C3) mindestens eines Parameters ist und die Eingangsangaben Indikatoren PC2, PC3) sind, die für einen eventuellen Störungszustand des Moduls zur Erfassung repräsentativ sind.

3. Verfahren nach Anspruch 1 oder 2, wobei die Indikatoren, die für einen eventuellen Störungszustand des Moduls zur Erfassung repräsentativ sind, von einem Störungsverwaltungsmodul (GP) ausgegeben werden.

4. Verfahren nach einem der vorhergehenden Ansprüche, wobei die Eingangsangaben des Erzeugungsmoduls (M1) Gültigkeitsangaben (IV1d_Vi) sind, die mit Informationen in Verbindung stehen, die von einem anderen Modul (C1, C2, C3) an das Erzeugungsmodul ausgegeben werden.

5. Verfahren nach einem der vorhergehenden Ansprüche, wobei die Gültigkeitsangaben (IV1d_Vi) mehrere verschiedene Werte annehmen können, die jeweils für verschiedene Fehlfunktionsstufen repräsentativ sind.

6. Verfahren nach einem der vorhergehenden Ansprüche, wobei die Gültigkeitsangabe von dem Erzeugungsmodul (M1) der Information auf Grundlage von Ausfallangaben erstellt wird, die von dem Erzeugungsmodul (M1) selbst detektiert werden.

7. Steuerungssystem mit modularer Softwarearchitektur eines Antriebsstrangs eines Kraftfahrzeugs, umfassend mehrere Module (M1, M2, M3, C1, C2, C3), die geeignet sind, Informationen auszutauschen, deren Werte von einer Fehlfunktion des Steuerungssystems und/oder des Antriebsstrangs beeinflusst werden können, wobei die Werte der Informationen von Gültigkeitsangaben beeinflusst werden, wobei die Definition und die Art und Weise der Erstellung der Gültigkeitsangaben, die mit den Informationen in Verbindung stehen, bei einer Softwareentwicklung der Module in Abhängigkeit von den Bedarfen und den eigenen Kapazitäten der Module durchgeführt wurden, jedes dieser Module umfassend Eingangsmittel, die geeignet sind, Eingangsangaben (IV1d _Vi) zu empfangen, die für eine eventuelle Fehlfunktion dieses Moduls oder eines anderen Moduls repräsentativ sind, mindestens eines dieser Module (M1, C1, C2, C3) umfassend Ausgangsmittel, die geeignet sind, mindestens eine Information (V) auszugeben, und Mittel zur Erstellung, die geeignet sind, jeder Information die Gültigkeitsangabe (IV1d_V) des Werts jeder Information auf Grundlage der Eingangsangaben und einer Softwareprogrammierung des Moduls, die aus den Entwicklungsinformationen des Moduls hervorgeht, die die Definition und die Art und Weise der Erstellung der Gültigkeitsangabe betreffen, zuzuweisen.

8. System nach Anspruch 7, wobei mindestens ein Modul ein Modul zur Erfassung (Ci) mindestens eines Parameters ist und die Eingangsangaben, die dazu bestimmt sind, von den Eingangsmitteln dieses Moduls zur Erfassung empfangen zu werden, Indikatoren sind, die für einen eventuellen Störungszustand des Moduls zur Erfassung repräsentativ sind.

9. Verfahren nach einem der Ansprüche 7 oder 8, ferner umfassend ein Störungsverwaltungsmodul (GP), das geeignet ist, die Indikatoren auszugeben, die für einen eventuellen Störungszustand mindestens eines Moduls repräsentativ sind.

10. Verfahren nach einem der Ansprüche 7 bis 9, wobei die Eingangsangaben, die dazu bestimmt sind, von den Eingangsmitteln mindestens eines Moduls (M1) empfangen zu werden, Gültigkeitsangaben (IV1d_Vi) sind, die mit Informationen in Verbindung stehen, die von einem anderen Modul an dieses Modul ausgegeben werden.

11. System nach einem der Ansprüche 7 bis 10, wobei die Gültigkeitsangaben (IV1d_Vi) mehrere verschiedene Werte annehmen können, die jeweils für verschiedene Fehlfunktionsstufen repräsentativ sind.

12. System nach einem der Ansprüche 7 bis 11, wobei mindestens ein Modul Mittel zur Detektion seines eigenen Ausfalls umfasst.

## Claims

1. Method for managing information exchanged within a modular software-architecture control system of a motor vehicle drive train and the values of which are likely to be affected by a malfunction of said control system and/or of said drive train, wherein each of these information items is assigned a validity indication (IV1d_V) for the value of said information item (V), the defining and the method of generating the validity of the indications associated with said information items having been performed during a software design of the modules of said modular-architecture control system according to the specific needs and capacities of the modules, and during said exchange of information items assigned to an information item said validity indication assigned to an information item is generated by a module (M1, C1, C2, C3) generating said information (V) from input indications (IV1d_Vi) received by said generator module (M1) and representative of a possible malfunction of this generator module or of another module (C1, C2, C3) and from a software programming of said generator module resulting from the design information items of said module relating to the defining and to the method of generating said validity indication.

2. Method according to Claim 1, wherein the generator module is a module (C1, C2, C3) for acquiring at least one parameter and the input indications are indicators PC2, PC3) representative of a possible fault state of said acquisition module.

3. Method according to Claim 1 or 2, wherein the indicators representative of a possible fault state of said acquisition module are delivered by a fault manager module (GP).

4. Method according to any one of the preceding claims, wherein the input indications of said generator module (M1) are validity indications (IV1d_Vi) associated with information items delivered to said generator module by another module (C1, C2, C3).

5. Method according to one of the preceding claims, wherein the validity indications (IV1d_Vi) are likely to take several different values respectively representative of different levels of malfunction.

6. Method according to any one of the preceding claims, wherein the validity indication is generated by the module (M1) generating said information from failure indications detected by the generator module (M1) itself.

7. Modular software-architecture control system for a motor vehicle drive train, comprising a number of modules (M1, M2, M3, C1, C2, C3) able to exchange information, the values of which are likely to be affected by a malfunction of said control system and/or of said drive train, the values of said information items being assigned validity indications, the defining and the method of generating the validity indications associated with said information items having been performed during a software design of said modules according to the specific needs and capacities of the modules each of these modules comprising input means able to receive input indications (IV1d_Vi) representative of a possible malfunction of this module or of another module, at least one of these modules (M1, C1, C2, C3) comprising output means able to deliver at least one information item (V) and generation means able to assign each information item a validity indication (IV1d_V) concerning the value of each information item from said input indications and from a software programming of said module resulting from the design information items of said module relating to the defining and to the method of generating said validity indication.

8. System according to Claim 7, wherein at least one module is a module (Ci) for acquiring at least one parameter and the input indications intended to be received by the input means of this acquisition module are indicators representative of a possible fault state of said acquisition module.

9. System according to one of Claims 7 or 8, also comprising a fault manager module (GP) able to deliver the indicators representative of a possible fault state of at least one module.

10. System according to one of Claims 7 to 9, wherein the input indications intended to be received by the input means of at least one module (M1) are validity indications (IV1d_Vi) associated with information items delivered to this module by another module.

11. System according to one of Claims 7 to 10, wherein the validity indications (IV1d_Vi) are likely to take several different values respectively representative of different levels of malfunction.

12. System according to any one of Claims 7 to 11, wherein at least one module comprises means of detecting its own failure.
